# EUROPEAN PATENT APPLICATION

(11) **EP 2 894 539 A1**
(43) Date of publication of application: **15.07.2015**
(21) Application number: 12884322.4
(22) Date of filing: 16.11.2012
(51) Int. Cl.: G05G 1/36, B60T 7/04, G05G 1/40

(54) **PEDAL UNIT FOR VEHICLE**

(30) Priority: 06.09.2012 JP 2012196592
(71) Applicant: Toyoda Iron Works Co., Ltd., Toyota-shi Aichi 471-8507 (JP)
(72) Inventor: HAYASHIHARA Takashi, Toyota-shi Aichi 471-8507 (JP); KAWAHARA Nobuyuki, Toyota-shi Aichi 471-8507 (JP)
(74) Representative: TBK
(86) International application number: PCT/JP2012/079837
(87) International publication number: WO 2014/038098

(57) **Abstract**

Provided is a pedal unit for a vehicle in which a plurality of pedals are arranged in a vehicle via a common base bracket and variation in the positional relationship of the plurality of pedals relative to one another that is caused by dimensional errors and assembly errors in each pedal is minimized.

A brake pedal (26) and an accelerator pedal (42) are arranged in a vehicle via a common base bracket (12). As a result of the accelerator pedal (42) being mounted to the base bracket (12) via a position adjustment bracket (14) and the mounting position of said position adjustment bracket (14) being configured to be three-dimensionally adjustable with respect to the base bracket (12), it is possible to minimize variation in the positional relationship between the pedals caused by dimensional errors in each of the components of a brake pedal assembly (20) and an accelerator pedal assembly (22) and by assembly errors with respect to the base bracket (12) and the position adjustment bracket (14).

## Description

### TECHNICAL FIELD

The present invention relates to a vehicle pedal unit, and particularly, relates to a vehicle pedal unit in which a first pedal and a second pedal are arranged in a vehicle via a common base bracket.

### BACKGROUND ART

A vehicle pedal unit is proposed, in which a first pedal and a second pedal are provided apart from each other in a vehicle width direction, and are arranged in a vehicle via a common base bracket. Devices described in Patent Documents 1 and 2 are examples of the vehicle pedal unit, in each of which a plurality of pedals such as an accelerator pedal and a brake pedal are arranged on the common base bracket, and supports which rotatably support respective arms of the pedals are provided integrally with the base bracket.

### Prior Art Documents

### Patent Documents

Patent Document 1: Japanese Patent Application Publication No. 2000-185632
Patent Document 2: Japanese Patent Application Publication No. 2003-165426

### SUMMARY OF THE INVENTION

### Problems to be Solved by the Invention

However, in the conventional vehicle pedal unit as described above, the supports which rotatably support the pedals are provided integrally with the base bracket, so a mutual positional relationship between pedal sheets (treads) of the plurality of pedals may vary due to a dimension error, an assembly error or the like of each pedal. If dimension accuracy and assembly accuracy of each pedal are increased, then such variations of the mutual positional relationship decrease; however, manufacturing cost thereof increases.

The present invention has been made in view of the above-described circumstances, and it is an object of the present invention to suppress, in a vehicle pedal unit including a plurality of pedals that are arranged in a vehicle via a common base bracket, variations in a mutual positional relationship between the plurality of pedals due to a dimension error and an assembly error of each pedal.

### Means for Solving the Problem

To achieve the object, the first aspect of the invention provides a vehicle pedal unit, in which a first pedal and a second pedal are provided apart from each other in a vehicle width direction and are arranged in a vehicle via a common base bracket, characterized in that the second pedal is attached to the base bracket via a position adjustment bracket, and an attachment position of the position adjustment bracket with respect to the base bracket is adjustable. Note that such adjustment of the attachment position described above includes not only translation of the position adjustment bracket in a constant attitude but also rotation or the like with which the attitude is changed.

The second aspect of the invention provides the vehicle pedal unit recited in the first aspect of the invention, wherein an arrangement position of the second pedal is three-dimensionally adjustable through adjustment of the attachment position of the position adjustment bracket with respect to the base bracket. Note that "three-dimensionally adjustable" means being movable in three-dimensional directions containing all of directional components of a vehicle width direction, a vehicle up-down direction and a vehicle longitudinal direction. For example, the second pedal may be linearly movable only in a specific direction of the three-dimensional directions.

The third aspect of the invention provides the vehicle pedal unit recited in the second aspect of the invention, wherein the position adjustment bracket and the base bracket form an adjustment contact portion that is three-dimensionally movable relative to each other, and the attachment position of the position adjustment bracket with respect to the base bracket is three-dimensionally adjusted via the adjustment contact portion so that the arrangement position of the second pedal is three-dimensionally adjusted.

The fourth aspect of the invention provides the vehicle pedal unit recited in the third aspect of the invention, wherein the adjustment contact portion allows the position adjustment bracket to slide with respect to the base bracket in a first sliding direction having a component in the vehicle width direction, and allow the position adjustment bracket to swing in a direction orthogonal to the first sliding direction at a position within a slidable range of the position adjustment bracket.

The fifth aspect of the invention provides the vehicle pedal unit recited in the fourth aspect of the invention, wherein (a) the adjustment contact portion includes: (a-1) a base-side curved portion, provided on the base bracket, including a predetermined width dimension in the first sliding direction, and curved with a constant radius in the direction orthogonal to the first sliding direction; and (a-2) an adjustment-side curved portion, provided in the position adjustment bracket, including a predetermined width dimension in the first sliding direction, and curved with a constant radius in the direction orthogonal to the first sliding direction so as to be brought into surface contact with the base-side curved portion, and (a-3) the position adjustment bracket is slidable and swingable with respect to the base bracket in a state where the adjustment-side curved portion is brought into surface contact with the base-side curved portion.

The sixth aspect of the invention provides the vehicle pedal unit recited in the fourth aspect of the invention, wherein (a) the adjustment contact portion includes: (a-1) a pair of base-side planar portions, which are flat, are provided on the base bracket apart from each other in the direction orthogonal to the first sliding direction, each have a predetermined width dimension in the first sliding direction, and are mutually inclined in respective directions a direction each orthogonal to the first sliding direction; and (a-2) a pair of adjustment-side planar portions, which are flat, are provided on the position adjustment bracket apart from each other in the direction orthogonal to the first sliding direction, each have a predetermined width dimension in the first sliding direction, are mutually inclined in respective directions a direction each orthogonal to the first sliding direction, and are brought into surface contact or line contact with the base-side planar portions, and (a-3) the position adjustment bracket is slidable and swingable with respect to the base bracket in a state where the adjustment-side planar portions are respectively in contact with the base-side planar portions. Note that "the pair of base-side planar portions mutually inclined" means the pair of the base-side planar portions being in a relationship that planes including the base-side planar portions intersect with each other at a predetermined inclination angle. The same also applies to the pair of the adjustment-side planar portions.

The seventh aspect of the invention provides the vehicle pedal unit recited in the third aspect of the invention, wherein the adjustment contact portion allows the position adjustment bracket to slide with respect to the base bracket in the first sliding direction having a component in the vehicle width direction, and allow the position adjustment bracket to slide in a second sliding direction containing components of a vehicle up-down direction and a vehicle longitudinal direction at a position within a slidable range of the position adjustment bracket, the vehicle up-down direction and the vehicle longitudinal direction being orthogonal to the first sliding direction.

The eighth aspect of the invention provides the vehicle pedal unit recited in the seventh aspect of the invention, wherein (a) the adjustment contact portion includes: (a-1) a pair of base-side planar portions, which are flat, are provided on the base bracket apart from each other in the direction orthogonal to the first sliding direction, each have a predetermined width dimension in the first sliding direction, and are parallel to the second sliding direction; and (a-2) a pair of adjustment-side planar portions, which are flat, are provided on the position adjustment bracket apart from each other in the direction orthogonal to the first sliding direction, each have a predetermined width dimension in the first sliding direction, are parallel to the second sliding direction, and are brought into surface contact with the base-side planar portions, and (a-3) the position adjustment bracket is slidable with respect to the base bracket in the first sliding direction and the second sliding direction in a state where the adjustment-side planar portions are respectively brought into surface contact with the base-side planar portions.

The ninth aspect of the invention provides the vehicle pedal unit recited in the second aspect of the invention, wherein (a) the attachment position of the position adjustment bracket in the vehicle width direction with respect to the base bracket is adjustable, the position adjustment bracket includes a pedal attachment plate portion, which is flat and intersects the vehicle width direction, and the second pedal is arranged on the pedal attachment plate portion, and (b) an arrangement position of the second pedal with respect to the pedal attachment plate portion is two-dimensionally adjustable in a plane parallel to the pedal attachment plate portion.

The tenth aspect of the invention provides the vehicle pedal unit recited in any one of the first to ninth aspects of the invention, wherein (a) the base bracket is attached to an attachment surface of a vehicle in a state where a predetermined gap is present between the base bracket and the attachment surface by screwing a fastening bolt to a fastening female screw provided on the attachment surface, (b) a nut member is fixedly provided on a back surface of the base bracket, and (c) the vehicle pedal unit has a fastening structure, in which an adjustment collar in which a male screw that is screwed to the nut member is provided on an outer circumferential surface is fixedly attached to the fastening bolt with a predetermined fixing strength and is screwed to the nut member, a distal end of the adjustment collar is protruded from the nut member to abut against the attachment surface, the fastening bolt is released from fixed attachment to the adjustment collar to be screwed into the fastening female screw, so that the base bracket is fastened and fixed to the attachment surface in a state where the nut member and the adjustment collar screwed to each other are put between the base bracket and the attachment surface.

In the vehicle pedal unit as described above, while a first pedal and a second pedal are provided in a vehicle via a common base bracket, the second pedal is attached to the base bracket via a position adjustment bracket, and an attachment position of the position adjustment bracket with respect to the base bracket is adjustable. Therefore, it is possible to suppress the variations of the mutual positional relationship between the pedals, which are caused by the dimension errors and the assembly errors of the pedals. For example, the attachment position of the position adjustment bracket with respect to the base bracket may be adjusted such that the second pedal is located at the predetermined position with the first pedal arranged on the base bracket in advance as a reference.

In the second aspect of the invention, since an arrangement position of the second pedal is three-dimensionally adjustable through adjustment of the attachment position of the position adjustment bracket with respect to the base bracket, it is possible to further properly suppress the variations of the mutual positional relationship between the pedals, which are caused by the dimension errors and the assembly errors of the pedals.

In the third aspect of the invention, since the attachment position of the position adjustment bracket with respect to the base bracket is three-dimensionally adjustable via the adjustment contact portion, an arrangement position of the second pedal can be adjusted three-dimensionally only by the position adjustment bracket, and adjustment work can be performed easily and rapidly.

In the fourth aspect of the invention, since the adjustment contact portion allows the position adjustment bracket to slide with respect to the base bracket in a first sliding direction having a component in the vehicle width direction, and allow the position adjustment bracket to swing in a direction orthogonal to the first sliding direction at a position within a slidable range of the position adjustment bracket, arrangement attitudes of the second pedal regarding the width direction, longitudinal direction and up-down direction of the vehicle as well as an upward orientation and downward orientation thereof can be adjusted. Moreover, the position of the pedal sheet can be changed largely with a slight swing. Thus, a compact and inexpensive apparatus can be achieved.

In the fifth aspect of the invention, while the base-side curved portion is provided on the base bracket, the adjustment-side curved portion is provided on the position adjustment bracket. In addition, the position adjustment bracket is slidable and swingable with respect to the base bracket in a state where the adjustment-side curved portion is brought into surface contact with the base-side curved portion. Therefore, the attachment position of the position adjustment bracket can be adjusted smoothly, and attachment strength thereof with respect to the base bracket can be ensured easily.

In the sixth aspect of the invention, while a pair of base-side planar portions, which are flat, are provided on the base bracket, a pair of adjustment-side planar portions, which are flat, are provided on the position adjustment bracket. In addition, the position adjustment bracket is slidable and swingable with respect to the base bracket in a state where the adjustment-side planar portions are respectively in contact with the base-side planar portions. In this case, the base-side planar portions and the adjustment-side planar portions, which are flat, just need to be provided as the adjustment contact portion. Thus, it is possible to form the adjustment contact portion easily and at low cost with high accuracy, which is advantageous in terms of quality and productivity. Although the base-side planar portions and the adjustment-side planar portions are basically brought into line contact with each other, the sufficient attachment strength can be ensured by welding and swaging and the like.

In the seventh aspect of the invention, since the adjustment contact portion allows the position adjustment bracket to slide with respect to the base bracket in the first sliding direction having a component in the vehicle width direction, and allow the position adjustment bracket to slide in a second sliding direction containing components of a vehicle up-down direction and a vehicle longitudinal direction at a position within a slidable range of the position adjustment bracket, the vehicle up-down direction and the vehicle longitudinal direction being orthogonal to the first sliding direction, the position adjustment bracket and the arrangement position of the second pedal can be adjusted properly and three-dimensionally.

In the eighth aspect of the invention, while a pair of base-side planar portions, which are flat, are provided on the base bracket, a pair of adjustment-side planar portions, which are flat, are provided on the position adjustment bracket. In addition, the position adjustment bracket is slidable with respect to the base bracket in the first sliding direction and the second sliding direction in a state where the adjustment-side planar portions are respectively in surface contact with the base-side planar portions. In addition, the position adjustment bracket is translated in a two-dimensional plane defined by the first sliding direction and the second sliding direction. Accordingly, the attachment position of the position adjustment bracket can be adjusted smoothly, and the attachment strength thereof with respect to the base bracket can be ensured easily. Furthermore, the base-side planar portions and the adjustment-side planar portions, which are flat, just need to be provided as the adjustment contact portion. Thus, it is possible to form the adjustment contact portion easily and at low cost with high accuracy, which is advantageous in terms of quality and productivity.

In the ninth aspect of the invention, since the attachment position of the position adjustment bracket in the vehicle width direction with respect to the base bracket is adjustable, the position adjustment bracket includes a pedal attachment plate portion, which is flat and intersects the vehicle width direction, and an arrangement position of the second pedal with respect to the pedal attachment plate portion is two-dimensionally adjustable in a plane parallel to the pedal attachment plate portion, the arrangement position of the second pedal can be adjusted three-dimensionally. In this case, since the position adjustment bracket can be fixed to the base bracket by the screw fastening, the predetermined attachment strength can be acquired easily.

The tenth aspect of the invention is the invention regarding the fastening structure in which the base bracket is fastened and fixed to the attachment surface by screwing a fastening bolt to a fastening female screw provided on the attachment surface of the vehicle. A nut member is fixedly provided on a back surface of the base bracket, and an adjustment collar in which a male screw that is screwed to the nut member is provided on an outer circumferential surface is fixedly attached to the fastening bolt with a predetermined fixing strength and is screwed to the nut member, a distal end of the adjustment collar is protruded from the nut member to abut against the attachment surface, the fastening bolt is released from fixed attachment to the adjustment collar to be screwed into the fastening female screw, so that the base bracket is fastened and fixed to the attachment surface in a state where the nut member and the adjustment collar screwed to each other are put between the base bracket and the attachment surface. Therefore, even in the case where the dimension between the base bracket and the attachment surface partly varies due to the dimension errors of the attachment surface, the base bracket can be fixed to the attachment surface without deforming the base bracket. Thus, also in the state where the second pedal, which is arranged on the base bracket so as to establish a predetermined positional relationship with respect to the first pedal by the position adjustment of the position adjustment bracket, is arranged on the attachment surface of the vehicle via the base bracket, the relative positional relationship with respect to the first pedal is maintained appropriately.

### BRIEF DESCRIPTION OF THE DRAWINGS

FIG. 1 is a perspective view showing a vehicle pedal unit as an embodiment of the present invention.
FIG. 2 shows two orthographic views of a base bracket of the vehicle pedal unit of FIG. 1 alone, FIG. 2(a) is a front view and FIG. 2(b) is a right side view.
FIG. 3 shows two orthographic views of a position adjustment bracket of the vehicle pedal unit of FIG. 1 alone, FIG. 3(a) is a front view and FIG. 3(b) is a right side view.
FIG. 4 shows two orthographic views of the position adjustment bracket arranged on the adjustment/attachment seat portion of the base bracket, in which FIG. 4(a) is a front view and FIG. 4(b) is a right side view.
FIG. 5 is a perspective view of the position adjustment bracket arranged on the adjustment/attachment seat portion of the base bracket.
FIG 6 is a view for explaining the way of adjusting the attachment position of the position adjustment bracket with respect to the adjustment/attachment seat portion of the base bracket.
FIG 7 is a view of another example of the adjustment contact portion, which makes the attachment position of the position adjustment bracket with respect to the base bracket adjustable and the view for explaining the way of adjustment, which corresponds to FIG 6.
FIG 8 is a view of yet another example of the adjustment contact portion, which makes the attachment position of the position adjustment bracket with respect to the base bracket adjustable and the view for explaining the way of adjustment, which corresponds to FIG 6.
FIG 9 is a view of yet another example of the adjustment contact portion, which makes the attachment position of the position adjustment bracket with respect to the base bracket adjustable and the view for explaining the way of adjustment, which corresponds to FIG 6.
FIG 10 is a view of yet another example of the present invention, and a perspective view corresponding to FIG 1.
FIG. 11 shows two orthographic views of a position adjustment bracket of the example of FIG 10 alone, FIG. 11(a) is a front view and FIG. 11(b) is a right side view.
FIG. 12 shows two orthographic views of the position adjustment bracket arranged on the adjustment/attachment seat portion of the base bracket in the example of IFG 10, in which FIG. 12(a) is a front view and FIG. 12(b) is a right side view.
FIG. 13 is a perspective view of the position adjustment bracket arranged on the adjustment/attachment seat portion of the base bracket in the example of IFG 10.
FIG 14 is a view of yet another example of the present invention, and a perspective view corresponding to FIG 1.
FIG. 15 shows two orthographic views of a base bracket of the example of FIG 14 alone, FIG. 15(a) is a front view and FIG. 15(b) is a right side view.
FIG. 16 shows two orthographic views of a position adjustment bracket of the example of FIG 14 alone, FIG. 16(a) is a front view and FIG. 16(b) is a right side view.
FIG 17 is a schematic view for explaining a dimension defining a pedal seat position of the brake pedal that is a reference when adjusting an attachment position of the position adjustment bracket with respect to the base bracket, FIG. 17(a) is a front view and FIG. 17(b) is a right side view.
FIG 18 is a view for explaining a fastening structure of fastening with a gap d being present between the attachment surfaces when the base bracket is fixed and fastened to the attachment surface of the vehicle by using the fastening bolt.
FIG 19 is a view for explaining an initial state which the adjustment collar is fixedly attached to the fastening bolt with a predetermined fixation strength in the fastening structure of FIG 18.

### MODES FOR CARRYING OUT THE INVENTION

The present invention is suitably applied to a case of arranging a brake pedal for service braking and an accelerator pedal as the first pedal and the second pedal, respectively, on the common base bracket and assembling the brake pedal and the accelerator pedal to the vehicle. The present invention can also be applied to a case of arranging a brake pedal for parking and a clutch pedal for a manual transmission car on the base bracket and assembling the brake pedal and the clutch pedal to the vehicle. It is also possible to arrange three or more types of pedals to a common base bracket. These pedals are attached as a pedal assembly, which is rotatably assembled to a pedal support in advance, to the base bracket and the position adjustment bracket. The pedal assembly may include a detection device that electrically detects an operation amount (an operation stroke, operation force or the like).

The first pedal may be directly attached to the base bracket. However, the first pedal may be attached to the base bracket via the position adjustment bracket in a similar way to the second pedal. It is desirable that a pedal, to which relatively large operation force is applied, such as the brake pedal for service braking or parking, be directly attached as the first pedal to the base bracket.

The base bracket and the position adjustment bracket are formed of, for example, a metal material such as those formed by pressing a metal plate material. However, the base bracket and the position adjustment bracket may be formed of a material other than metal, such as a synthetic resin material. A variety of modes of the base bracket and the position adjustment bracket are possible. That is, one of the base bracket and the position adjustment bracket is formed of metal, and the other is made of a material other than metal, such as a synthetic resin material. In the case where both the base bracket and the position adjustment bracket are made of metal, the base bracket and the position adjustment bracket can be fixedly fitted with each other by welding or swaging after position adjustment, and thus, a degree of freedom in relative movement thereof is high. However, the base bracket and the position adjustment bracket can be fixed to each other by screw fastening by providing long holes therein, depending on a mode of the relative movement.

The base bracket may be fixed to the attachment surface of the vehicle in a state where both of the first pedal and the second pedal are attached thereto in advance. However, only the second pedal may be attached to the base bracket via the position adjustment bracket in advance, and when fixing the base bracket to the vehicle, the first pedal may be attached to the base bracket simultaneously therewith. The first pedal and the second pedal just need to be attached via the common base bracket in the state of being arranged in the vehicle.

As in the third invention, it is desirable that the position adjustment bracket include the adjustment contact portion three-dimensionally movable relative to the base bracket. However, when carrying out the first invention and the second invention, for example, the position adjustment bracket just needs to be provided so as to be slidable linearly in the vehicle width direction. In general, the base bracket is arranged in an attitude perpendicular to the longitudinal direction of the vehicle, and accordingly, the position adjustment bracket is slidable in the vehicle width direction in a state of being in surface contact with the base bracket. Alternatively, the position adjustment bracket may be slidable in the up-down direction of the vehicle, or may be slidable in one linear direction in a two-dimensional plane containing a width direction and an up-and-down direction or within a desired adjustment range (plane) in the two-dimensional plane.

In the sixth invention, the pair of the base-side planar portions are provided on the base bracket, and the pair of the adjustment-side planar portions are provided on the position adjustment bracket. However, also in the fifth invention, the base-side curved portions curved with a constant radius about a common swing reference point may be respectively provided at two locations spaced apart from each other in a direction orthogonal to a sliding direction, the adjustment-side curved portions curved with the constant radius about the swing reference point may also be respectively provided at the two locations spaced apart from each other in the direction orthogonal to the sliding direction, and the curved portions may be brought into surface contact with each other at the two locations. A center (swing reference point) of the radius of the base-side curved portions and the adjustment-side curved portions can be set at any position on the vehicle front side or the vehicle rear side of the base bracket. However, if the center is set on a vehicle front side that is the same as that of a rotation center of the pedal, a position change (rotation about the swing reference point) of the pedal sheet, which follows the position adjustment of the position adjustment bracket, becomes approximate to a position shift (rotation about the pedal rotation center) at the time when the pedal sheet is depressed, which reduces an influence on pedal operability. As the swing reference point becomes closer to the pedal rotation center, the position change of the pedal sheet, which follows the position adjustment, becomes closer to the position shift at the time when the pedal sheet is depressed.

In the sixth invention, the pair of the base-side planar portions, which are flat, are provided on the base bracket, and the pair of the adjustment-side planar portions, which are flat, are provided on the position adjustment bracket. However, when carrying out the fourth invention, a variety of modes are possible. That is, the base-side planar portions and the adjustment-side planar portions may not be flat, the base-side planar portions and the adjustment-side planar portions may be smoothly curved, or either of the base-side planar portions or the adjustment-side planar portions may be rounded into a C-shape, a cylindrical shape, or the like in their cross section.

For example, in the case where both of the base bracket and the position adjustment bracket are formed of the metal plate material, the base-side planar portions and the adjustment-side planar portions of each of the sixth invention and the eighth invention can be formed of flat plate-like portions. However, at least respective one sides of the base bracket and the position adjustment bracket that come in contact with each other need to be flat. In the eighth invention, the pair of the base-side planar portions, which are flat, are provided on the base bracket, and the pair of the adjustment-side planar portions, which are flat, are provided on the position adjustment bracket. However, when carrying out the seventh invention, a variety of modes are possible. That is, either of the base-side planar portions or the adjustment-side planar portions may not be flat, and may be rounded into a C-shape, a cylindrical shape or the like in their cross section. Alternatively, only one base-side planar portion and only one adjustment-side planar portion may be provided. Furthermore, when carrying out the third invention, it is possible to form the base-side planar portions and the adjustment-side planar portions into a desired shape such as a curved shape.

In the ninth invention, the position adjustment bracket includes the pedal attachment plate portion, which is flat and intersects the vehicle width direction, the arrangement position of the second pedal with respect to the pedal attachment plate portion is two-dimensionally adjustable in the plane parallel to the pedal attachment plate portion, and for example, is swingable about a predetermined centerline in the plane parallel to the pedal attachment plate portion. However, a variety of modes are possible. That is, the arrangement position may be slidable in one linear direction in the plane, or may be slidable within a desired adjustment range (plane). The pedal attachment plate portion is provided, for example, orthogonally to the vehicle width direction. However, the pedal attachment plate portion may be provided while being inclined from such an orthogonal direction toward the vehicle width direction. Moreover, the position adjustment bracket is arranged so as to be slidable, for example, in the first sliding direction having a component of the vehicle width direction. However, as in the third invention to the eighth invention, the adjustment contact portion that allows the attachment position of the position adjustment bracket to be three-dimensionally adjusted with respect to the base bracket may be provided.

With the fastening structure of the tenth invention, it is possible to fix the base bracket to the attachment surface of the vehicle without deforming the base bracket even in the case where an interval between the attachment surface of the vehicle and the base bracket varies due to a dimension error of the attachment surface or the like. Although the fastening structure may be applied to all of a plurality of screw fastening portions for fixing the base bracket to the attachment surface, it may be applied to at least one of the screw fastening portions. In an initial state, the adjustment collar is fixedly attached to the fastening bolt with the predetermined fixing strength. This fixing strength is determined such that the adjustment collar can be screwed to the nut member by rotating the fastening bolt and fixed attachment can be released without deforming the attachment surface and the base bracket when the adjustment collar protrudes from the nut member and abuts against the attachment surface. The adjustment collar is fixedly attached to the fastening bolt by an adhesive, welding, brazing, swaging and the like. It is desirable that the fastening bolt and the adjustment collar be fixedly attached substantially concentrically. For example, desirably, a female screw is provided on an inner circumferential surface of the adjustment collar, a male screw of the fastening bolt is screwed thereto so that the fastening bolt and the adjustment collar are temporarily assembled to each other, and the fastening bolt and the adjustment collar are fixedly attached in that state. Note that, in the case where dimension accuracy of the attachment surface of the vehicle is high or in the case of carrying out the other inventions, the above-described fastening structure may not be provided, and the base bracket may be fixed to the attachment surface by simple screw fastening, in which the fastening bolt is only screwed to the fastening female screw, or if necessary, a spacer may be used so that the dimension error of the attachment surface is absorbed.

### Embodiments

Hereinafter, embodiments of the present invention will be described in detail with reference to the drawings.

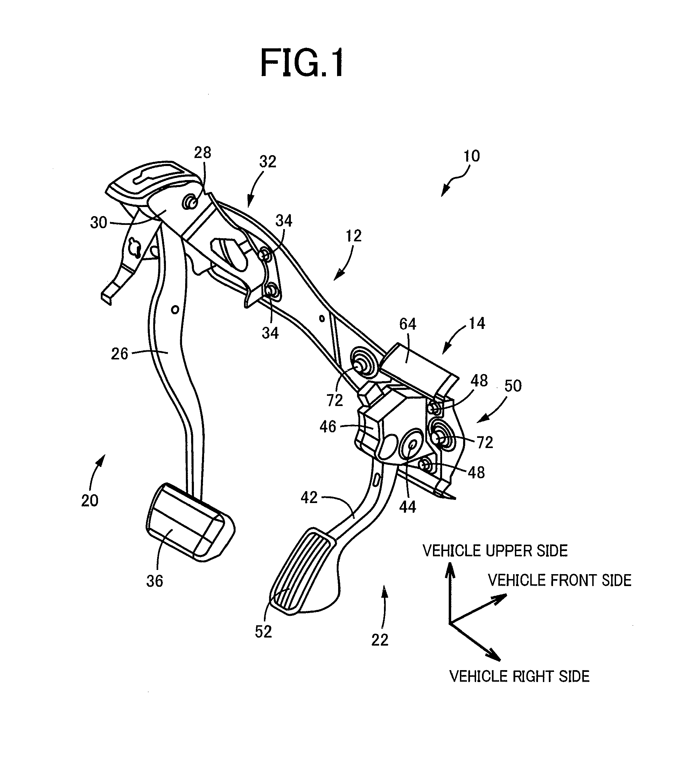

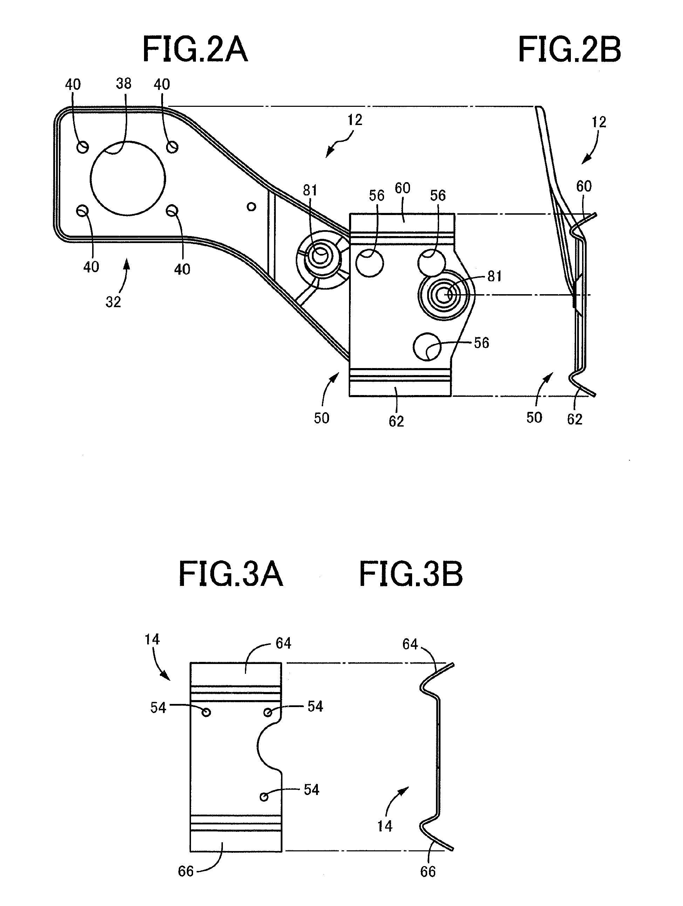

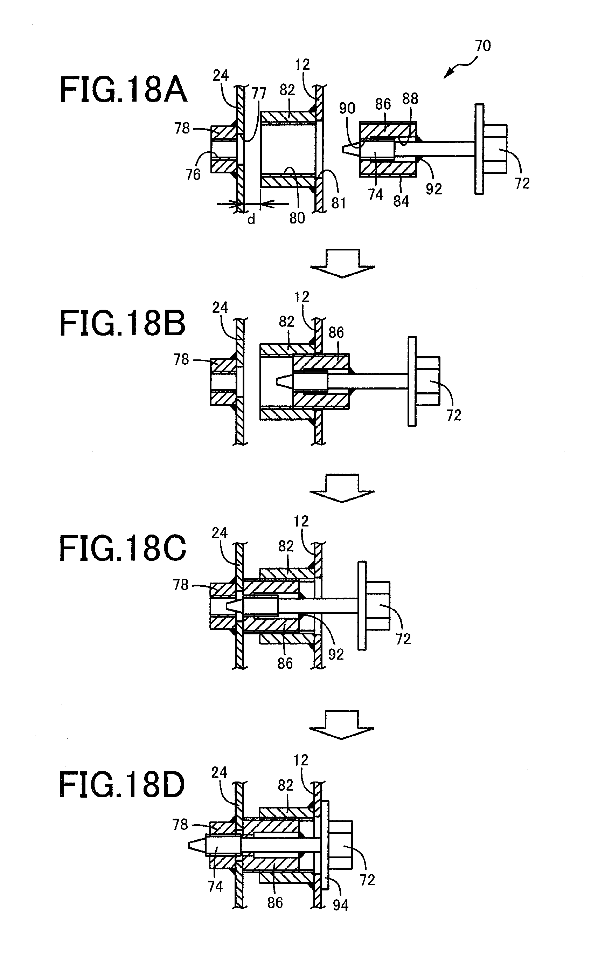

FIG. 1 is a perspective view showing a vehicle pedal unit 10 as an embodiment of the present invention, FIG. 2 shows two orthographic views of a base bracket 12 of the vehicle pedal unit 10 of FIG. 1 alone, and FIG. 3 shows two orthographic views of a position adjustment bracket 14 of the vehicle pedal unit 10 of FIG. 1 alone. FIG. 2(a) and FIG. 3(a) are front views of the base bracket 12 and the position adjustment bracket 14, respectively, viewed from a vehicle rear side, that is, a driver's seat side in an arrangement state in a vehicle, and FIG. 2(a) and FIG. 3(a) are right side views thereof. This vehicle pedal unit 10 is for arranging a brake pedal assembly 20 for service braking and an accelerator pedal assembly 22 on a vehicle dash panel 24 (refer to FIG. 18) via a common base bracket 12. A vehicle cabin-side surface of the dash panel 24 corresponds to an attachment surface.

The brake pedal assembly 20 is a brake pedal assembly in which a brake pedal 26 is arranged on a pedal support 30 so as to be rotatable about a support shaft 28, and the pedal support 30 is fixedly fitted to a brake attachment portion 32, which is provided on a left end portion of the base bracket 12, by using a plurality of fastening bolts 34. In the brake attachment portion 32 of the base bracket 12, an insertion hole 38 for inserting an operating rod therethrough is provided, and in addition, a plurality of attachment holes 40 for inserting the fastening bolts 34 therethrough are provided. The fastening bolts 34 penetrate the pedal support 30, the base bracket 12 and the above-described dash panel 24, and are screwed to nut members provided on a brake booster, and the brake attachment portion 32 of the base bracket 12 is fixedly fitted to the dash panel 24 together with the brake pedal assembly 20. The brake pedal 26 corresponds to a first pedal. When a pedal sheet 36 provided at a lower end portion of the brake pedal 26 is depressed, the brake pedal 26 pushes the operating rod (not shown) toward a vehicle front side to mechanically generate a brake oil pressure via the brake booster. Note that FIG. 1 shows a state where the base bracket 12 is fixed to the dash panel 24 together with the brake pedal assembly 20 by using the above-mentioned fastening bolts 34.

The accelerator pedal assembly 22 is an accelerator pedal assembly in which an accelerator pedal 42 is arranged on a pedal support 46 so as to be rotatable about a support shaft 44, and in the pedal support 46, there is built in an operation amount detection device that electrically detects an operation amount (operation stroke or operation force) of the accelerator pedal 42. The pedal support 46 is integrally attached to the position adjustment bracket 14 by using a plurality of fastening bolts 48, and the position adjustment bracket 14 is fixedly fitted to a predetermined position in an adjustment/attachment seat portion 50, which is provided at a right end portion of the base bracket 12, by welding or swaging. In the position adjustment bracket 14, a plurality of attachment holes 54 for inserting the fastening bolts 48 therethrough are provided, and in addition, in the adjustment/attachment seat portion 50 of the base bracket 12, a plurality of through holes 56 are provided in order to avoid interference with nuts (not shown) to which the fastening bolts 48 are screwed. The through holes 56 are provided so as to be somewhat large in consideration of adjusting an attachment position of the position adjustment bracket 14 with respect to the adjustment/attachment seat portion 50. The accelerator pedal 42 corresponds to a second pedal. When a pedal sheet 52 provided at a lower end portion of the accelerator pedal 42 is depressed, an operation amount thereof is detected by the above-described operation amount detection device, and an output of a prime mover such as an engine is electrically controlled based on the operation amount.

Both of the base bracket 12 and the position adjustment bracket 14 described above are formed by pressing a metal plate material, and have a flat plate shape as a whole. The base bracket 12 is fixed to the dash panel 24 so as to be substantially perpendicular to a vehicle longitudinal direction. This attachment position of the position adjustment bracket 14 with respect to the base bracket 12 is adjustable, and position adjustment of the accelerator pedal 42 can be performed via the position adjustment bracket 14.

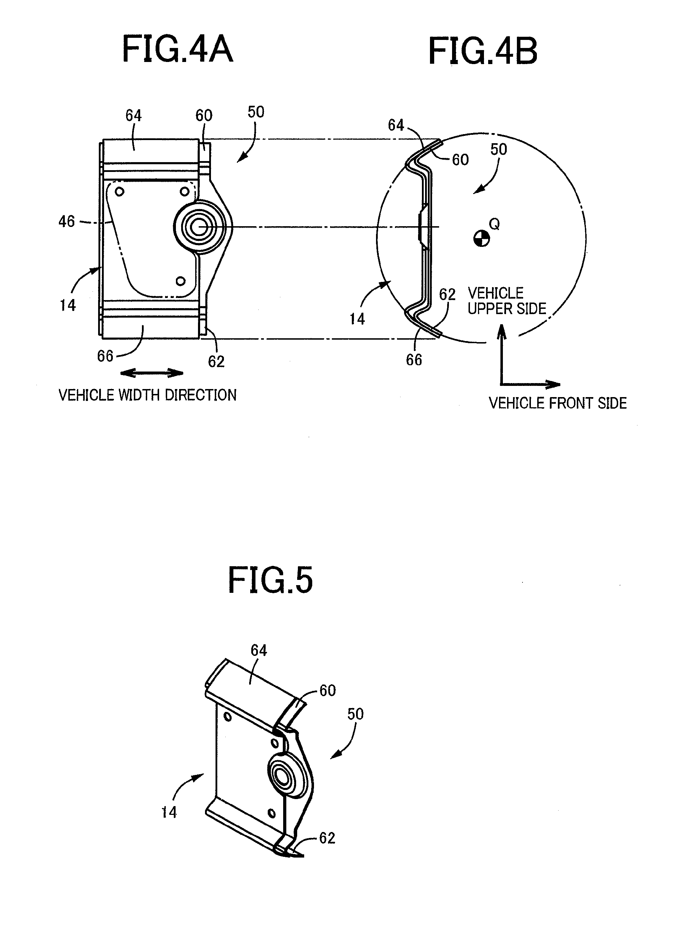

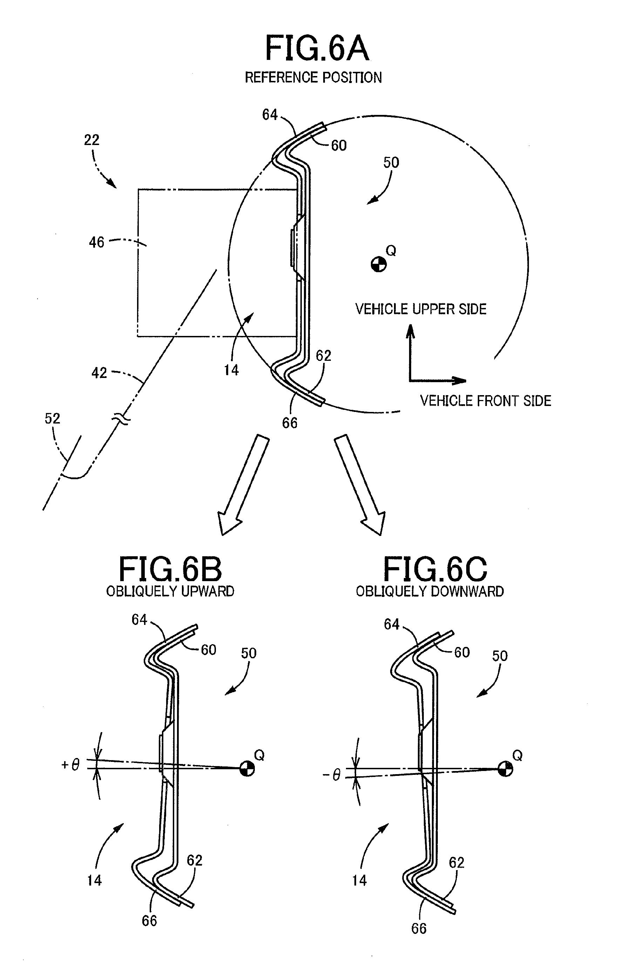

FIG. 4 shows two orthographic views of the position adjustment bracket 14 arranged on the adjustment/attachment seat portion 50 of the base bracket 12, in which FIG. 4(a) is a front view and FIG. 4(b) is a right side view, and FIG. 5 is a perspective view thereof. In FIG. 4 and FIG. 5, the position adjustment bracket 14 is slidable by a predetermined dimension in the vehicle width direction (first sliding direction) as shown in FIG. 4(a) in a state where the position adjustment bracket 14 is arranged at a reference position that is a center position of an adjustment range. Moreover, FIG. 6 shows right side views corresponding to FIG. 4(b), where the position adjustment bracket 14 is swingable within an angle range of ±θ so as to face obliquely upward as shown in FIG. 4(b) and obliquely face downward as shown in FIG. 4(c) from a reference position shown in FIG. 4(a) at a position within a slidable range of the position adjustment bracket 14 in the vehicle width direction. Thus, the accelerator pedal 42 of the accelerator pedal assembly 22 fixedly fitted to this position adjustment bracket 14 is shiftable in the vehicle width direction, the vehicle longitudinal direction and a vehicle up-down direction, and a relative position of the pedal sheet 52 of the accelerator pedal 42 with respect to the pedal sheet 36 of the brake pedal 26 can be adjusted three-dimensionally.

A specific description of the above will be made below. The adjustment/attachment seat portion 50 of the base bracket 12 is provided with a pair of base-side curved portions 60 and 62. The base-side curved portions 60 and 62 each having a predetermined width dimension in the first sliding direction are respectively provided at upper and lower side portions of the adjustment/attachment seat portion 50, that is, at two locations thereof spaced apart from each other in a direction orthogonal to a first sliding direction that is the vehicle width direction. The base-side curved portions 60 and 62 are those curved in the direction orthogonal to the first sliding direction, and are curved toward the vehicle front side with a predetermined radius about a common swing reference point Q determined more toward the vehicle front side than the base bracket 12. Also, the position adjustment bracket 14 is provided with a pair of adjustment-side curved portions 64 and 66 each having a predetermined width dimension in the first sliding direction and curved toward the vehicle front side with a constant radius about the above-described swing reference point Q. The adjustment-side curved portions 64 and 66 are respectively provided at upper and lower side portions of the position adjustment bracket 14, that is, at two locations thereof spaced apart from each other in the direction orthogonal to the first sliding direction. The adjustment-side curved portions 64 and 66 are configured to be brought into surface contact with the base-side curved portions 60 and 62. Hence, in a state where the adjustment-side curved portions 64 and 66 of the position adjustment bracket 14 are brought into surface contact with the base-side curved portions 60 and 62, the position adjustment bracket 14 is slidable in the first sliding direction that is the vehicle width direction, and is swingable about the swing reference point Q in the direction orthogonal to the first sliding direction at a position within the slidable range, and the attachment position thereof with respect to the base bracket 12 is adjustable three-dimensionally. A dashed line of FIG. 6(a) is a circular arc with a constant radius about the swing reference point Q, and the curved portions 60 and 64 are brought into surface contact with each other and the curved portions 62 and 66 are brought into surface contact with each other so as to be relatively swingable along this circular arc. The base-side curved portions 60 and 62 and the adjustment-side curved portions 64 and 66 correspond to an adjustment contact portion.

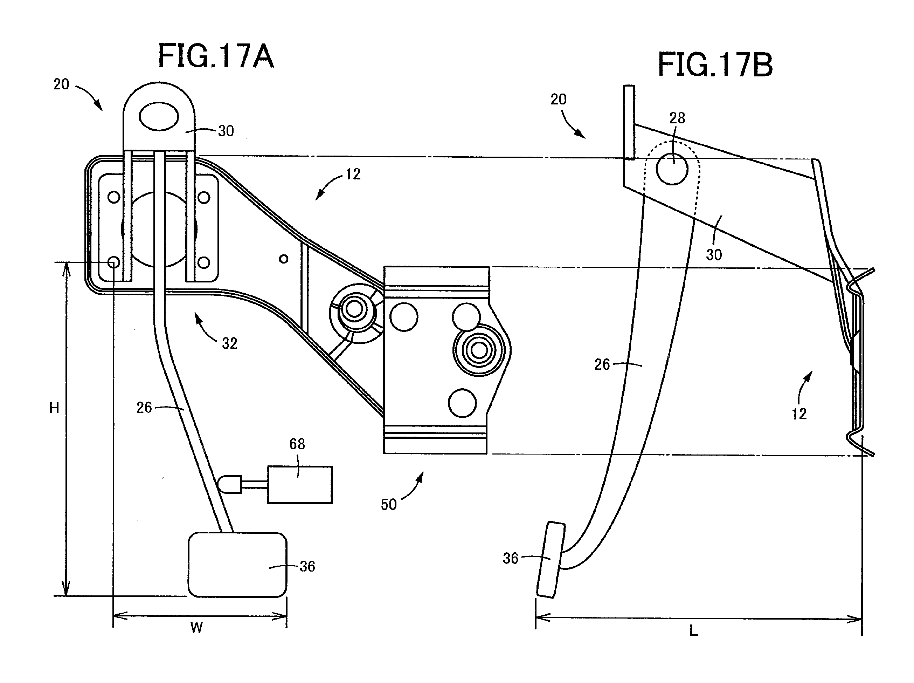

For position adjustment of the accelerator pedal 42, as shown in a schematic view of FIG. 17 for example, the brake pedal assembly 20 is assembled to the base bracket 12 attached to a jig, and is pressed by a pressing device 68 such as an air cylinder so that a backlash of the brake pedal 26 is the same as that in the state where the brake pedal 26 is mounted on the vehicle. In the state where the brake pedal 26 is mounted on the vehicle, the brake pedal 26 leans in a right direction or left direction of the vehicle by self weight thereof, and accordingly, this is reproduced on the jig, and FIG. 17 shows a case where the brake pedal 26 leans in the left direction. Then, a height position H, width direction position W and longitudinal direction position L of the brake pedal 26 are measured in that state, and the position adjustment of the position adjustment bracket 14, on which the accelerator pedal assembly 22 is arranged, with respect to the base bracket 12 is performed so that the accelerator pedal 42 can be located at predetermined width direction position and swinging position with a brake pedal position at that time as a reference. When the position of the position adjustment bracket 14 with respect to the base bracket 12 is determined, the curved portions 60 and 64 and the curved portions 62 and 66 are fixedly fitted to each other by welding or swaging. Thus, variations of the relative positions of the pedal sheets 36 and 52 of the brake pedal 26 and the accelerator pedal 42, respectively, can be suppressed irrespective of dimension errors of the parts of the brake pedal assembly 20 and the accelerator pedal assembly 22 and assembly errors thereof with respect to the base bracket 12.

Meanwhile, even if the relative positions of the pedal sheets 36 and 52 with respect to the base bracket 12 are controlled with high accuracy, the relative positions of the pedal sheets 36 and 52 of the pedals 26 and 42 may vary again if the base bracket 12 is deformed, due to the dimension error of the dash panel 24, at the time of attaching the base bracket 12 to the dash panel 24. Therefore, in this embodiment, the base bracket 12 is fixed to the dash panel 24 by using a fastening structure 70 shown in FIG. 18. That is, the left end portion of the base bracket 12 is fixedly fitted to the dash panel 24 together with the brake pedal assembly 20 by the fastening bolts 34 in a state of being in close contact with the dash panel 24, while the right end portion of the base bracket 12, at which the accelerator pedal assembly 22 is arranged via the position adjustment bracket 14, is fixedly fitted to the dash panel 24 by the above-described fastening structure 70 by using a pair of fastening bolts 72 as shown in FIG. 1. With the fastening structure 70, even in the case where an interval between the base bracket 12 and the dash panel 24 varies, it is possible to fix the base bracket 12 to the dash panel 24 without deforming the base bracket 12 despite the variations.

A specific description of the fastening structure 70 in FIG. 18 will be made below. A male screw 74 is provided on the fastening bolt 72, while a fastening nut 78 having a female screw 76 that is screwed to the male screw 74 is fixedly provided on a back surface side (engine room side) of the dash panel 24 by welding and the like. The fastening bolt 72 is screwed to the fastening nut 78, whereby the base bracket 12 is fixedly fitted to the dash panel 24. The female screw 76 corresponds to a fastening female screw, and an insertion hole 77 larger in diameter than the female screw 76 is provided in the dash panel 24. Moreover, on a back surface of the base bracket 12, that is, on a surface thereof facing the dash panel 24, a nut member 82 having a female screw 80 larger in diameter than the above-described female screw 76 is fixedly provided by welding and the like. To the fastening bolt 72, an adjustment collar 86 in which a male screw 84 that is screwed to the female screw 80 of the nut member 82 is provided on an outer circumferential surface is fixedly attached with a predetermined fixing strength. In the base bracket 12, an insertion hole 81 larger in diameter than the female screw 80 is provided.

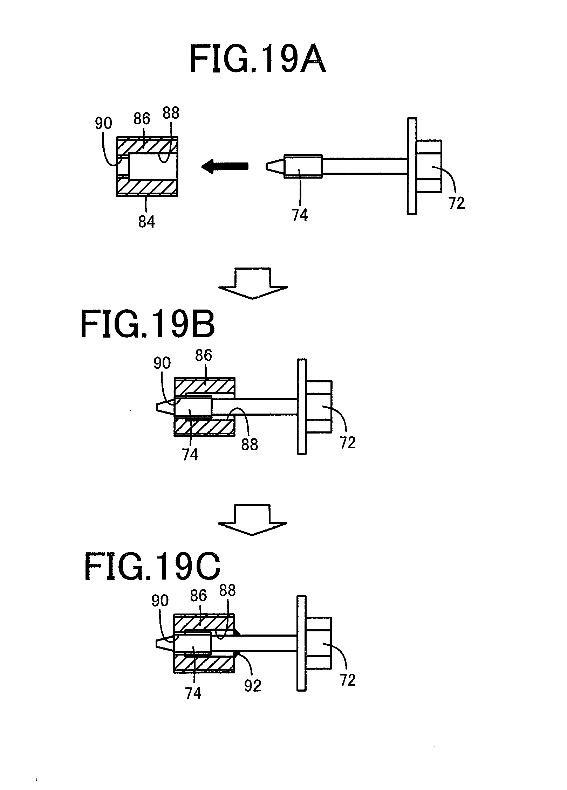

In the adjustment collar 86, an insertion hole 88 through which the male screw 74 of the fastening bolt 72 is inserted is provided at an axial center thereof, and a female screw 90 that is screwed to the male screw 74 is provided at a bottom portion of the insertion hole 88. The adjustment collar 86 is fixedly attached to a shaft portion of the fastening bolt 72 with an adhesive 92 in a state where the male screw 74 is screwed to the female screw 90. FIG. 19 shows a procedure of fixedly attaching the adjustment collar 86 to the fastening bolt 72. Since the female screw 90 is provided in the adjustment collar 86, the male screw 74 of the fastening bolt 72 is screwed to the female screw 90 so that the fastening bolt 72 and the adjustment collar 86 can be temporarily assembled to each other in a state of being positioned coaxially as shown in FIG. 19(b), and fixing work using the adhesive 92 in FIG. 19(c) can be performed with ease.

In the fastening structure 70 described above, even in the case where a predetermined gap d is present between the nut member 82 of the base bracket 12 and the dash panel 24 as shown in FIG. 18 and the gap d varies, the base bracket 12 can be fixed to the dash panel 24 with the gap d being present therebetween only by rotating and screwing the fastening bolt 72. That is, when the fastening bolt 72 is rotated, the adjustment collar 86 fixedly attached to the fastening bolt 72 is rotated integrally therewith. Accordingly, the adjustment collar 86 is screwed to the nut member 82 first, as shown in FIG. 18(b). When the fastening bolt 72 is further rotated to screw the adjustment collar 86 into the nut member 82, a distal end of the adjustment collar 86 protrudes from the nut member 82 and abuts against the dash panel 24, as shown in FIG. 18(c). When the fastening bolt 72 is further rotated in that state, the adjustment collar 86 cannot advance anymore and such fixed attachment between the fastening bolt 72 and the adjustment collar 86 is released. Thus, only the fastening bolt 72 screws forward, and is screwed to the fastening nut 78, as shown in FIG. 18(d). The fixing strength between the adjustment collar 86 and the fastening bolt 72 obtained with the use of the adhesive 92 is determined so that the adjustment collar 86 can be screwed to the nut member 82 by rotating the fastening bolt 72, and so that, when the adjustment collar 86 protrudes from the nut member 82 and abuts against the dash panel 24, the fixed attachment can be released without deforming the dash panel 24 and the base bracket 12. When a flange portion 94 provided at a head portion of the fastening bolt 72 abuts against the base bracket 12, the base bracket 12 is fixedly fitted to the dash panel 24 with a predetermined fastening strength in a state where the nut member 82 and the adjustment collar 86, which are screwed to each other, are sandwiched between the base bracket 12 and the dash panel 24.

As described above, in the vehicle pedal unit 10 of this embodiment, the brake pedal 26 and the accelerator pedal 42 are arranged in the vehicle via the common base bracket 12. However, the accelerator pedal 42 is attached to the base bracket 12 via the position adjustment bracket 14, and the attachment position of the position adjustment bracket 14 with respect to the base bracket 12 is adjustable. Thus, it is possible to suppress the variations of the mutual positional relationship between the pedals, which are caused by the dimension errors of the parts of the brake pedal assembly 20 and the accelerator pedal assembly 22 and the assembly errors of the brake pedal assembly 20 and the accelerator pedal assembly 22 with respect to the base bracket 12 and the position adjustment bracket 14. That is, the height position H, width direction position W and longitudinal direction position L of the brake pedal 26 are measured, and the position adjustment of the position adjustment bracket 14, on which the accelerator pedal assembly 22 is arranged, with respect to the base bracket 12 is performed such that the accelerator pedal 42 can be located at the predetermined width direction position and swinging position with the measured brake pedal position as a reference. Accordingly, the variations of the relative positions of the pedal sheets 36 and 52 of the brake pedal 26 and the accelerator pedal 42 can be appropriately suppressed.

In particular, in this embodiment, the attachment position of the position adjustment bracket 14 with respect to the base bracket 12 can be adjusted three-dimensionally. Accordingly, an arrangement position of the accelerator pedal 42 can be adjusted three-dimensionally only by the position adjustment of the position adjustment bracket 14, and adjustment work can be performed easily and rapidly.

The position adjustment bracket 14 is slidable with respect to the base bracket 12 in the first sliding direction as the vehicle width direction, and is swingable in the direction orthogonal to the first sliding direction at a position within the slidable range. Accordingly, arrangement attitudes of the accelerator pedal 42 regarding the width direction, longitudinal direction and up-down direction of the vehicle as well as an upward orientation and downward orientation thereof can be adjusted. Moreover, the position of the pedal sheet 52 can be changed largely with a slight swing. Thus, a compact and inexpensive apparatus can be achieved.

In this embodiment, the base-side curved portions 60 and 62 are provided on the base bracket 12, while the adjustment-side curved portions 64 and 66 are provided on the position adjustment bracket 14. The position adjustment bracket 14 is slidable and swingable with respect to the base bracket 12 in the state where the adjustment-side curved portions 64 and 66 are brought into surface contact with the base-side curved portions 60 and 62. Accordingly, the attachment position of the position adjustment bracket 14 can be adjusted smoothly, and an attachment strength thereof with respect to the base bracket 12 obtained by welding and the like can be ensured easily. In particular, in this embodiment, the base-side curved portions 60 and 62 are respectively provided at upper and lower side end portions of the base bracket 12, the adjustment-side curved portions 64 and 66 are respectively provided at upper and lower side portions of the position adjustment bracket 14, and the base bracket 12 and the position adjustment bracket 14 are brought into surface contact with each other at two locations. Accordingly, the attitude of the position adjustment bracket 14 is further stabilized, the adjustment of the attachment position can be performed more easily, and a high attachment strength is obtained.

Moreover, in this embodiment, the fastening structure 70 shown in FIG. 18 is used in order to fix, to the dash panel 24, the right end portion of the base bracket 12 on which the accelerator pedal assembly 22 is arranged via the position adjustment bracket 14. Accordingly, even in the case where the interval, that is, the gap d between the base bracket 12 and the dash panel 24 varies due to the dimension errors of the dash panel 24, the base bracket 12 can be fixed to the dash panel 24 by screw fastening without deforming the dash panel 24 and the base bracket 12 irrespective of the variations of the gap d. Thus, also in the state where the accelerator pedal 42, which is arranged on the base bracket 12 so as to establish a predetermined positional relationship with respect to the brake pedal 26 by the position adjustment of the position adjustment bracket 14, is arranged on the dash panel 24 of the vehicle via the base bracket 12, the relative positional relationship of the accelerator pedal 42 with respect to the brake pedal 26 is maintained appropriately.

Next, other embodiments of the present invention will be described. Note that in the following embodiments, like reference numerals denote elements substantially the same as those in the foregoing embodiment to omit the detailed description thereof.

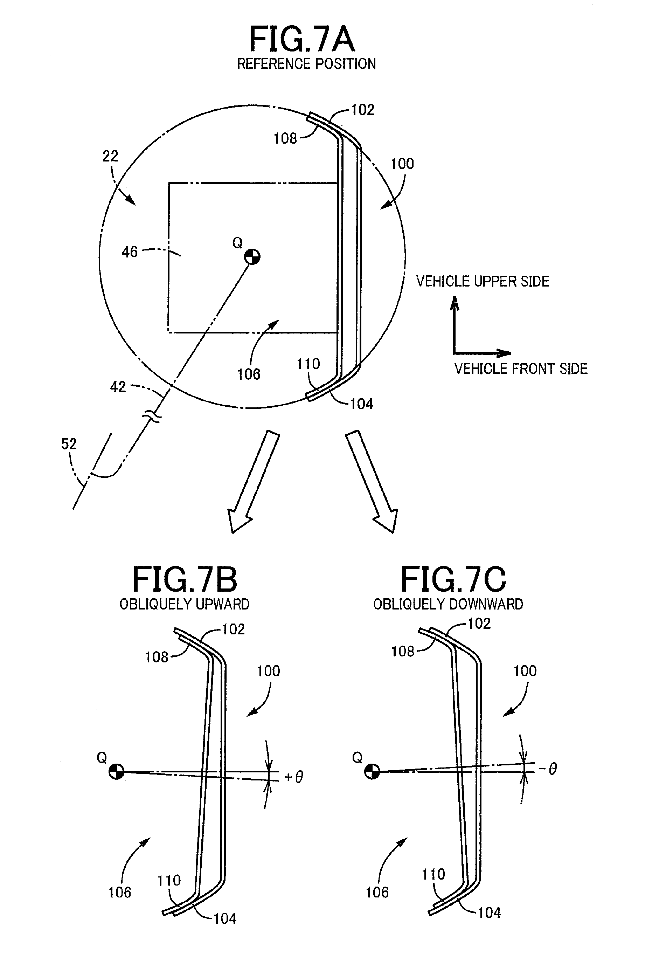

FIG. 7 shows views corresponding to those in FIG. 6 described above. The above-described swing reference point Q is set more toward the vehicle rear side than the base bracket 12. In this embodiment, the reference point Q is set at a position that substantially coincides with a rotation center of the accelerator pedal 42. That is, on an adjustment/attachment seat portion 100 of the base bracket 12, a pair of base-side curved portions 102 and 104, which are curved toward the vehicle rear side with a constant radius about the swing reference point Q, are provided. On a position adjustment bracket 106 on which the accelerator pedal assembly 22 is arranged, a pair of adjustment-side curved portions 108 and 110, which are curved toward the vehicle rear side with a constant radius about the swing reference point Q, are provided. The position adjustment bracket 106 is swingable about the swing reference point Q in a state where the adjustment-side curved portions 108 and 110 are brought into surface contact with the base-side curved portions 102 and 104. The base-side curved portions 102 and 104 and the adjustment-side curved portions 108 and 110 correspond to an adjustment contact portion.

Also in this embodiment, the position adjustment bracket 106, on which the accelerator pedal assembly 22 is arranged, is swingable within the angle range of ±θ so as to face obliquely upward as shown in FIG. 7(b) and face obliquely downward as shown in FIG. 7(c) from a reference position shown in FIG. 7(a), and by combining the swing with the position adjustment by the slide in the vehicle width direction, the position of the pedal sheet 52 of the accelerator pedal 42 can be adjusted three-dimensionally. Thus, functions and effects similar to those of the above-described embodiment are obtained. In addition, in this embodiment, the swing reference point Q is set at the position that is more toward the vehicle rear side than the base bracket 12 and that substantially coincides with the rotation center of the accelerator pedal 42. Accordingly, a position change (rotation about the swing reference point Q) of the pedal sheet 52, which follows the position adjustment by the swing of the position adjustment bracket 106, becomes approximate to a position shift (rotation about the pedal rotation center) at the time when the pedal sheet 52 is depressed. Thus, an influence on pedal operability, which is given by the position adjustment of the position adjustment bracket 106, is small.

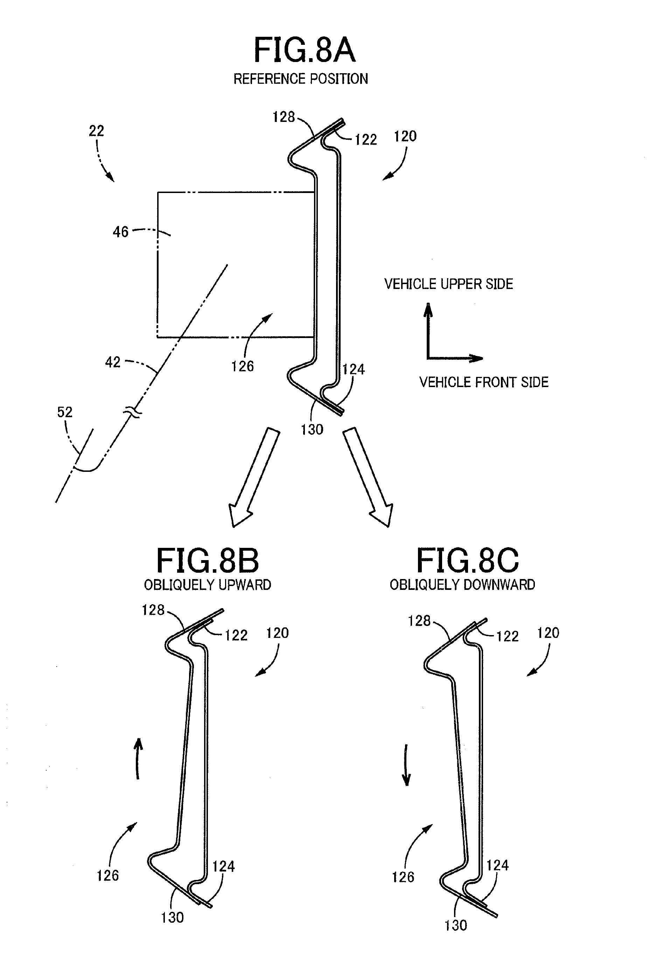

FIG. 8 shows views corresponding to those in FIG. 6 described above. In this embodiment, at upper and lower side portions of an adjustment/attachment seat portion 120 of the base bracket 12, base-side planar portions 122 and 124, which are flat and protrude toward the vehicle front side in an attitude of being inclined (intersecting) to each other, are respectively provided. Also at upper and lower side portions of a position adjustment bracket 126 on which the accelerator pedal assembly 22 is arranged, adjustment-side planar portions 128 and 130, which are flat and protrude toward the vehicle front side in an attitude of being mutually inclined (intersecting), are respectively provided. In a state where the pair of the adjustment-side planar portions 128 and 130 are in contact with the pair of the base-side planar portions 122 and 124, respectively, the position adjustment bracket 126 is slidable in the vehicle width direction with respect to the adjustment/attachment seat portion 120 and is swingable in the direction orthogonal to the vehicle width direction. In this embodiment, at a reference position shown in FIG. 8(a), the pair of the adjustment-side planar portions 128 and 130 are provided at an inclination angle, at which the adjustment-side planar portions 128 and 130 are parallel to the base-side planar portions 122 and 124, respectively, and are brought into surface contact with each other. However, the adjustment-side planar portions 128 and 130 are brought into line contact with the base-side planar portions 122 and 124, respectively, when the position adjustment bracket 126 is swung obliquely upward as shown in FIG. 8(b) or swung obliquely downward as shown in FIG. 8(c). Even in this case, the base-side planar portions 122 and 124 and the adjustment-side planar portions 128 and 130 can be fixedly fitted with each other with a predetermined attachment strength obtained by welding or swaging at desired relative positions. The base-side planar portions 122 and 124 and the adjustment-side planar portions 128 and 130 correspond to an adjustment contact portion.

Also in this embodiment, the position adjustment bracket 126 on which the accelerator pedal assembly 22 is arranged is swingable so as to face obliquely upward as shown in FIG. 8(b) and obliquely downward as shown in FIG. 8(c) from the reference position shown in FIG. 8(a), and by combining the swing with the position adjustment by the slide in the vehicle width direction, the position of the pedal sheet 52 of the accelerator pedal 42 can be adjusted three-dimensionally. Accordingly, similar functions and effects to those of the above-described embodiment are obtained. In addition, the base-side planar portions 122 and 124 and the adjustment-side planar portions 128 and 130, which are flat, just need to be provided as the adjustment contact portion. Thus, it is possible to form the position adjustment bracket 126 easily and at low cost with high accuracy by pressing, which is advantageous in terms of quality and productivity.

Note that, in the embodiment in FIG. 8, the base-side planar portions 122 and 124 and the adjustment-side planar portions 128 and 130 are provided so as to protrude toward the vehicle front side; however, as in the embodiment shown in FIG. 7, it is also possible to provide the base-side planar portions 122 and 124 and the adjustment-side planar portions 128 and 130 so that the base-side planar portions 122 and 124 and the adjustment-side planar portions 128 and 130 protrude toward the vehicle rear side.

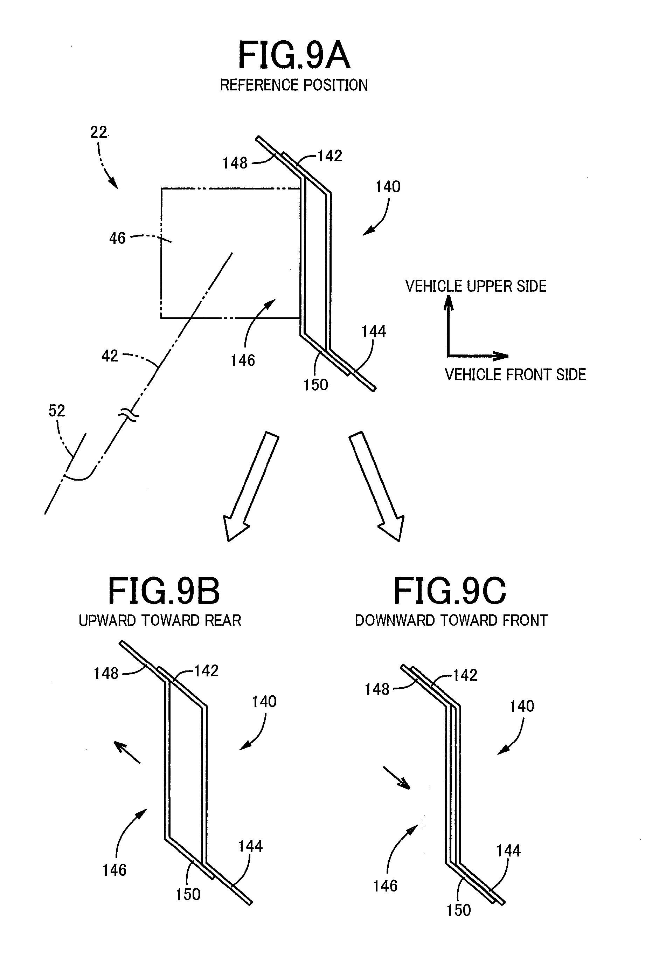

FIG. 9 shows views corresponding to those in FIG. 6 described above. In this embodiment, at an upper side portion of an adjustment/attachment seat portion 140 of the base bracket 12, a base-side planer portion 142, which is flat and protrudes obliquely toward the vehicle rear side at a predetermined inclination angle, is provided, and at a lower side portion of the adjustment/attachment seat portion 140, a base-side planer portion 144, which is flat and protrudes obliquely toward the vehicle front side in parallel to the planer portion 142, is provided. At upper and lower side portions of a position adjustment bracket 146 on which the accelerator pedal assembly 22 is arranged, adjustment-side planar portions 148 and 150, which are flat and protrude toward the vehicle rear side and the vehicle front side, respectively, in parallel to the above-described base-side planar portions 142 and 144, are respectively provided. A protruding direction of the planar portions 142, 144, 148 and 150 is a second sliding direction containing components of the vehicle up-down direction and the vehicle longitudinal direction. The above-described inclination angle is determined appropriately, and it is also possible to provide the planar portions 142, 144, 148 and 150 so that the planar portions 142 and 148 protrude toward the vehicle front side and the planar portions 144 and 150 protrude toward the vehicle rear side. In a state where the pair of the adjustment-side planar portions 148 and 150 are in surface contact with a pair of the base-side planar portions 142 and 144, the position adjustment bracket 146 is slidable in the vehicle width direction (first sliding direction) with respect to the adjustment/attachment seat portion 140, and is slidable in the second sliding direction orthogonal to the vehicle width direction. Thus, the accelerator pedal assembly 22 is three-dimensionally translated in a constant attitude. Even in this case, the base-side planar portions 142 and 144 and the adjustment-side planar portions 148 and 150 can be fixedly fitted with each other with a predetermined attachment strength obtained by welding or swaging at desired relative positions. The base-side planar portions 142 and 144 and the adjustment-side planar portions 148 and 150 correspond to the adjustment contact portion.

Also in this embodiment, the position adjustment bracket 146 on which the accelerator pedal assembly 22 is arranged is slidable so as to face obliquely upward toward the rear of the vehicle as shown in (b) and obliquely downward toward the front of the vehicle as shown in (c) from the reference position shown in (a), and the position of the pedal sheet 52 of the accelerator pedal 42 can be adjusted three-dimensionally in combination with the position adjustment by the slide in the vehicle width direction. Thus, functions and effects similar to those of the above-described embodiment are obtained. Moreover, in the state where the pair of the adjustment-side planar portions 148 and 150 are brought into surface contact with the pair of the base-side planar portions 142 and 144, respectively, the position adjustment bracket 146 is slidable in the first sliding direction and the second sliding direction with respect to the adjustment/attachment seat portion 140, and is translated in a two-dimensional plane defined by the first sliding direction and the second sliding direction. Accordingly, the attachment position of the position adjustment bracket 146 can be adjusted smoothly, and the attachment strength thereof with respect to the adjustment/attachment seat portion 140 can be ensured easily. Furthermore, the base-side planar portions 142 and 144 and the adjustment-side planar portions 148 and 150, which are flat, just need to be provided as the adjustment contact portion. Thus, it is possible to form the position adjustment bracket 146 easily and at low cost with high accuracy by pressing, which is advantageous in terms of quality and productivity.

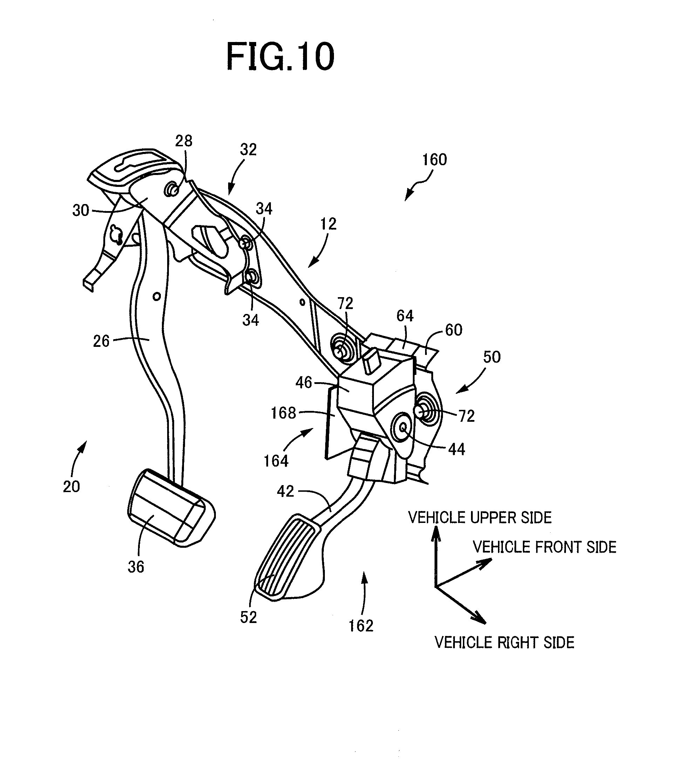

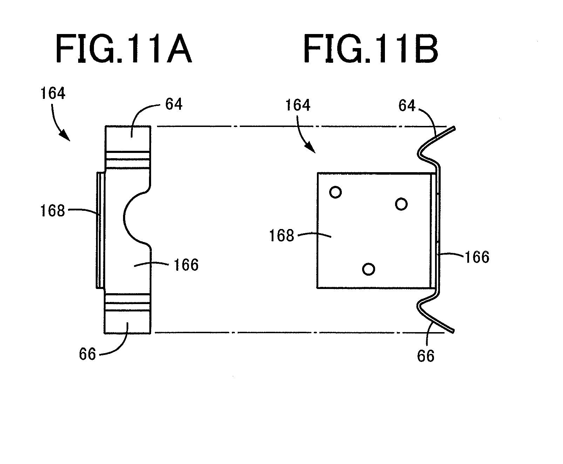

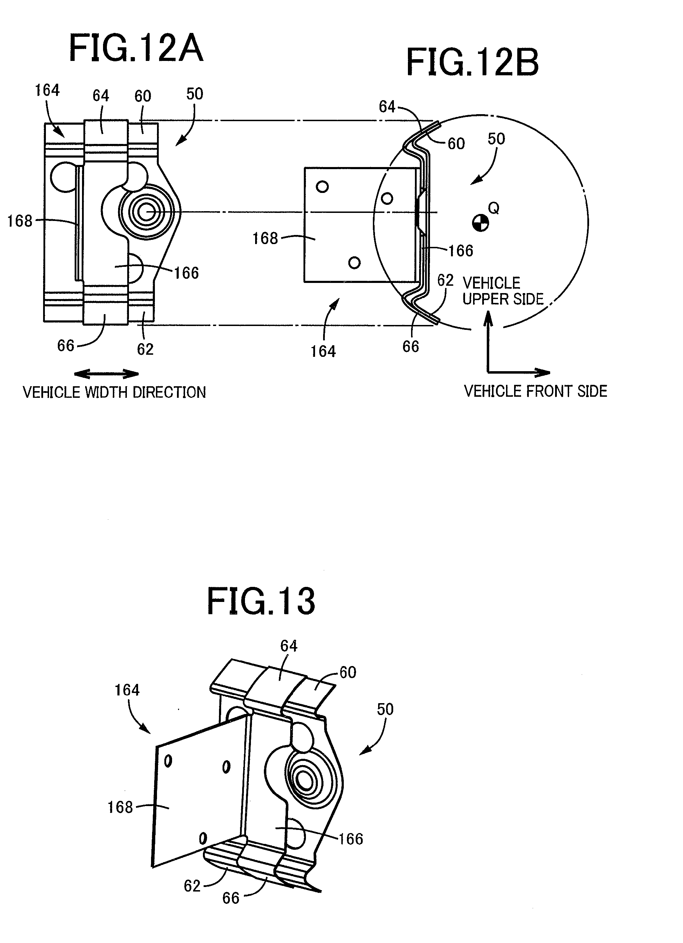

In comparison with the above-described vehicle pedal unit 10, a vehicle pedal unit 160 of FIG. 10 is different therefrom in an attachment structure for attaching an accelerator pedal assembly 162 to a position adjustment bracket 164, and a base bracket 12 is the same as that of the embodiment of FIG. 1 described above. FIG. 11 shows two orthographic views of the position adjustment bracket 164: FIG. 11(a) is a front view; and FIG. 11(b) is a right side view. FIG. 12 shows two orthographic views illustrating a state where the position adjustment bracket 164 is arranged on the adjustment/attachment seat portion 50 of the base bracket 12: FIG. 12(a) is a front view; and FIG. 12(b) is a right side view, and FIG. 13 is a perspective view of the position adjustment bracket 164.

The position adjustment bracket 164 includes: a position adjustment portion 166 in which the above-described adjustment-side curved portions 64 and 66 are provided at both upper and lower side portions; and a pedal attachment plate portion 168, which is flat and extends from the position adjustment portion 166 toward the vehicle rear side so as to be substantially orthogonal to the position adjustment portion 166. The accelerator pedal assembly 162 is integrally arranged on the pedal attachment plate portion 168 in a constant attitude. The accelerator pedal assembly 162 is configured in a similar way to the above-described accelerator pedal assembly 22 except that a side surface of the pedal support 46 is fixedly fitted to the pedal attachment plate portion 168 by attachment screws (not shown), and the accelerator pedal 42 is supported on the pedal support 46 so as to be rotatable about the support shaft 44.

Also in this embodiment, in a similar way to the embodiment of FIG. 1, the attachment position of the position adjustment bracket 164 is three-dimensionally adjustable with respect to the adjustment/attachment seat portion 50 of the base bracket 12. Thus, it is possible to obtain functions and effects that, for example, the position of the accelerator pedal 42 can be three-dimensionally adjusted with the brake pedal 26 as a reference, which are similar to those of the embodiment of FIG. 1 described above.

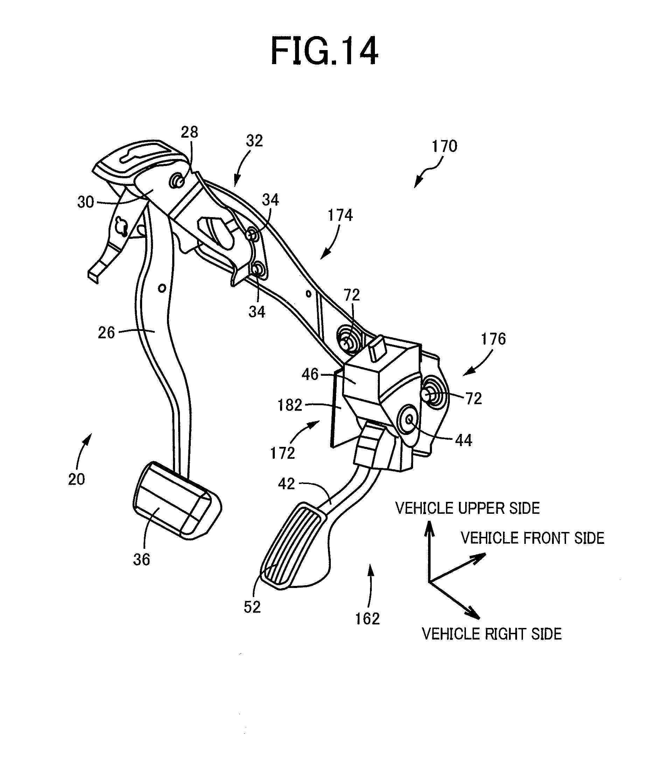

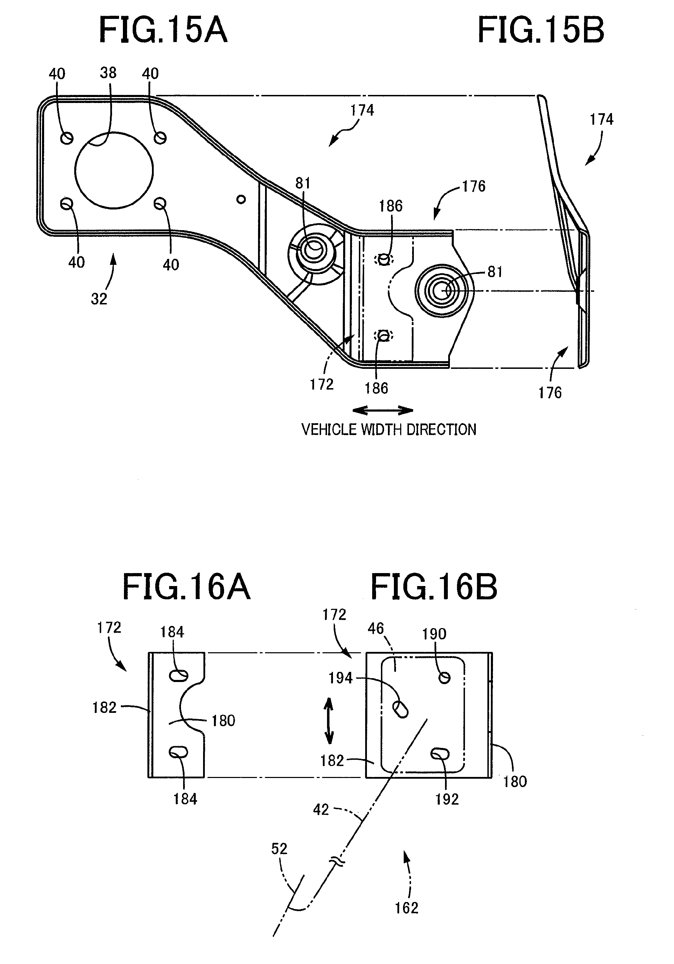

In comparison with the above-described vehicle pedal unit 160, a vehicle pedal unit 170 of FIG. 14 is different therefrom in that an attachment attitude of the accelerator pedal assembly 162 with respect to a position adjustment bracket 172 is changeable, and that it is only possible to positionally adjust the position adjustment bracket 172 in the vehicle width direction with respect to a base bracket 174. FIG. 15 shows two orthographic views of the base bracket 174: FIG. 15(a) is a front view; and FIG. 15(b) is a right side view. In comparison with the above-described base bracket 12, the base bracket 174 is different therefrom only in an adjustment/attachment seat portion 176 at a right end portion on which the position adjustment bracket 172 is arranged, and other constituents such as the brake attachment portion 32 on which the brake pedal assembly 20 is arranged are the same as those of the base bracket 12. FIG. 16 shows two orthographic views of the position adjustment bracket 172; FIG. 16(a) is a front view; and FIG. 16(b) is a right side view. The position adjustment bracket 172 includes: a bracket fixing plate portion 180, which is flat and is fixedly fitted to the above-described adjustment/attachment seat portion 176 while being in a surface contact with the adjustment/attachment seat portion 176 so as to be substantially perpendicular to the vehicle longitudinal direction; and a pedal attachment plate portion 182, which is flat and extends from the bracket fixing plate portion 180 toward the vehicle rear side so as to be substantially orthogonal to the bracket fixing plate portion 180. The accelerator pedal assembly 162 is attached to the pedal attachment plate portion 182.

A pair of long holes 184, which are long in the vehicle width direction, are provided in the bracket fixing plate portion 180, and insertion holes 186 are provided in the adjustment/attachment seat portion 176 of the base bracket 174. Hence, attachment screws (not shown) are inserted through the long holes 184 and the insertion holes 186, and are fastened to nuts and the like, whereby the position adjustment bracket 172 is fixedly fitted to the adjustment/attachment seat portion 176 and an attachment position thereof in the vehicle width direction with respect to the adjustment/attachment seat portion 176 can be adjusted within a range allowed by the long holes 184. Moreover, in the pedal attachment plate portion 182, there are provided: a reference hole 190; and a pair of long holes 192 and 194, which are long in a circumferential direction with the reference hole 190 as a center. The accelerator pedal assembly 162 is attached to the pedal attachment plate portion 182 by attachment screws inserted through the reference hole 190 and the long holes 192 and 194. In that case, the accelerator pedal assembly 162 is swingable about the reference hole 190 within a range allowed by the long holes 192 and 194. That is, the accelerator pedal assembly 162 is movable two-dimensionally in a plane parallel to the pedal attachment plate portion 182, and the attachment attitude of the accelerator pedal assembly 162 with respect to the pedal attachment plate portion 182 can be adjusted within such a swingable range.

As described above, also in this embodiment, the attachment position of the accelerator pedal assembly 162 with respect to the adjustment/attachment seat portion 176 can be three-dimensionally adjusted by the position adjustment of the position adjustment bracket 172 in the vehicle width direction with respect to the adjustment/attachment seat portion 176 and the adjustment of the swinging position of the position adjustment bracket 172 with respect to the pedal attachment plate portion 182 about the reference hole 190. Thus, similar effects to those of the embodiment of FIG. 1 are obtained. Moreover, the position adjustment bracket 172 is fixed to the adjustment/attachment seat portion 176 of the base bracket 174 by screw fastening. Accordingly, the predetermined attachment strength can be obtained easily and surely.

While embodiments of the present invention have been described in detail with reference to the drawings, each of the embodiments is merely one mode for carrying out the invention. The present invention may be implemented in various modes achieved by making various changes and improvements based on the knowledge of a person skilled in the art.

### NOMENCLATURE OF ELEMENTS

10, 160, 170: vehicle pedal unit 12, 174: base bracket 14, 106, 126, 146, 164, 172: position adjustment bracket 20: brake pedal assembly 22, 162: accelerator pedal assembly 24: dash panel (attachment surface) 26: brake pedal (first pedal) 42: accelerator pedal (second pedal) 60, 62, 102, 104: base-side curved portion (adjustment contact portion) 64, 66, 108, 110: adjustment-side curved portion (adjustment contact portion) 70: fastening structure 72: fastening bolts 76: female screw (fastening female screw) 82: nut member 86: adjustment collar 92: adhesive 122, 124, 142, 144: base-side planar portion (adjustment contact portion) 128, 130, 148, 150: adjustment-side planar portion (adjustment contact portion) 182: pedal attachment plate portion Q: swing reference point d: gap

## Claims

1. A vehicle pedal unit, in which a first pedal and a second pedal are provided apart from each other in a vehicle width direction and are arranged in a vehicle via a common base bracket, **characterized in that**
the second pedal is attached to the base bracket via a position adjustment bracket, and an attachment position of the position adjustment bracket with respect to the base bracket is adjustable.

2. The vehicle pedal unit according to claim 1, **characterized in that**
an arrangement position of the second pedal is three-dimensionally adjustable through adjustment of the attachment position of the position adjustment bracket with respect to the base bracket.

3. The vehicle pedal unit according to claim 2, **characterized in that**
the position adjustment bracket and the base bracket form an adjustment contact portion that is three-dimensionally movable relative to each other, and the attachment position of the position adjustment bracket with respect to the base bracket is three-dimensionally adjusted via the adjustment contact portion so that the arrangement position of the second pedal is three-dimensionally adjusted.

4. The vehicle pedal unit according to claim 3, **characterized in that**
the adjustment contact portion allows the position adjustment bracket to slide with respect to the base bracket in a first sliding direction having a component in the vehicle width direction, and allow the position adjustment bracket to swing in a direction orthogonal to the first sliding direction at a position within a slidable range of the position adjustment bracket.

5. The vehicle pedal unit according to claim 4, **characterized in that** the adjustment contact portion includes:
a base-side curved portion, provided on the base bracket, including a predetermined width dimension in the first sliding direction, and curved with a constant radius in the direction orthogonal to the first sliding direction; and
an adjustment-side curved portion, provided in the position adjustment bracket, including a predetermined width dimension in the first sliding direction, and curved with a constant radius in the direction orthogonal to the first sliding direction so as to be brought into surface contact with the base-side curved portion, and
the position adjustment bracket is slidable and swingable with respect to the base bracket in a state where the adjustment-side curved portion is brought into surface contact with the base-side curved portion.

6. The vehicle pedal unit according to claim 4, **characterized in that** the adjustment contact portion includes:
a pair of base-side planar portions, which are flat, are provided on the base bracket apart from each other in the direction orthogonal to the first sliding direction, each have a predetermined width dimension in the first sliding direction, and are mutually inclined in respective directions a direction each orthogonal to the first sliding direction; and
a pair of adjustment-side planar portions, which are flat, are provided on the position adjustment bracket apart from each other in the direction orthogonal to the first sliding direction, each have a predetermined width dimension in the first sliding direction, are mutually inclined in respective directions a direction each orthogonal to the first sliding direction, and are brought into surface contact or line contact with the base-side planar portions, and
the position adjustment bracket is slidable and swingable with respect to the base bracket in a state where the adjustment-side planar portions are respectively in contact with the base-side planar portions.

7. The vehicle pedal unit according to claim 3, **characterized in that**
the adjustment contact portion allows the position adjustment bracket to slide with respect to the base bracket in the first sliding direction having a component in the vehicle width direction, and allow the position adjustment bracket to slide in a second sliding direction containing components of a vehicle up-down direction and a vehicle longitudinal direction at a position within a slidable range of the position adjustment bracket, the vehicle up-down direction and the vehicle longitudinal direction being orthogonal to the first sliding direction.

8. The vehicle pedal unit according to claim 7, **characterized in that** the adjustment contact portion includes:
a pair of base-side planar portions, which are flat, are provided on the base bracket apart from each other in the direction orthogonal to the first sliding direction, each have a predetermined width dimension in the first sliding direction, and are parallel to the second sliding direction; and
a pair of adjustment-side planar portions, which are flat, are provided on the position adjustment bracket apart from each other in the direction orthogonal to the first sliding direction, each have a predetermined width dimension in the first sliding direction, are parallel to the second sliding direction, and are brought into surface contact with the base-side planar portions, and
the position adjustment bracket is slidable with respect to the base bracket in the first sliding direction and the second sliding direction in a state where the adjustment-side planar portions are respectively brought into surface contact with the base-side planar portions.

9. The vehicle pedal unit according to claim 2, **characterized in that**
the attachment position of the position adjustment bracket in the vehicle width direction with respect to the base bracket is adjustable, the position adjustment bracket includes a pedal attachment plate portion, which is flat and intersects the vehicle width direction, and the second pedal is arranged on the pedal attachment plate portion, and
an arrangement position of the second pedal with respect to the pedal attachment plate portion is two-dimensionally adjustable in a plane parallel to the pedal attachment plate portion.

10. The vehicle pedal unit according to any one of claims 1 to 9, **characterized in that**
the base bracket is attached to an attachment surface of a vehicle in a state where a predetermined gap is present between the base bracket and the attachment surface by screwing a fastening bolt to a fastening female screw provided on the attachment surface,
a nut member is fixedly provided on a back surface of the base bracket, and
the vehicle pedal unit has a fastening structure, in which an adjustment collar in which a male screw that is screwed to the nut member is provided on an outer circumferential surface is fixedly attached to the fastening bolt with a predetermined fixing strength and is screwed to the nut member, a distal end of the adjustment collar is protruded from the nut member to abut against the attachment surface, the fastening bolt is released from fixed attachment to the adjustment collar to be screwed into the fastening female screw, so that the base bracket is fastened and fixed to the attachment surface in a state where the nut member and the adjustment collar screwed to each other are put between the base bracket and the attachment surface.
